# EUROPEAN PATENT SPECIFICATION

(11) **EP 1 944 217 B1**
(45) Date of publication and mention of the grant of the patent: **09.03.2011**
(21) Application number: 08000502.8
(22) Date of filing: 09.01.2008
(51) Int. Cl.: B62D 3/12

(54) **Center-takeoff rack-and-pinion steering apparatus**
Zahnstangenlenkvorrichtung mit Mittenabtrieb
Appareil de boîtier de direction à crémaillère à entraînement central

(30) Priority: 09.01.2007 JP 2007001515
(43) Date of publication of application: 16.07.2008
(73) Proprietor: JTEKT CORPORATION, Chuo-ku, Osaka-shi, Osaka 542-8502 (JP)
(72) Inventor: Ohara, Yoshihide, Osaka-shi Osaka 542-8502 (JP); Hirose, Masahiko, Osaka-shi Osaka 542-8502 (JP); Hashimoto, Masaaki, Osaka-shi Osaka 542-8502 (JP); Watanabe, Mutsumi, Osaka-shi Osaka 542-8502 (JP); Tanake, Takahiro, Osaka-shi Osaka 542-8502 (JP)
(74) Representative: Gahlert, Stefan

(56) References cited:
- JP-A- 2000 062 628
- US-B1- 6 408 976

## Description

### BACKGROUND OF THE INVENTION

### Field of the Invention

The present invention relates to a center-takeoff rack-and-pinion steering apparatus. Description of Related Arts

A so-called center-takeoff steering apparatus is known as a steering apparatus. In the steering apparatus of this type, tie rods connected to vehicle wheels are taken off from a rack shaft at a transversely central position of a vehicle body. A steering mechanism, for example, includes the rack shaft and an elongate cylindrical rack housing receiving the rack shaft. The rack housing is formed with an elongate hole at a longitudinally intermediate portion thereof. Through this elongate hole, the rack shaft is coupled to the tie rods via a slider. The rack housing and the slider are adapted to slide on each other. For example, see Japanese Unexamined Patent Publications No.2000-62628 and No.2001-151140.

According to Japanese Unexamined Patent Publication No.2000-62628, the rack housing includes a first flat sliding contact surface formed on an inner periphery of the elongate hole, and a second flat sliding contact surface formed on an outer periphery of the rack housing at an edge portion enclosing the elongate hole.

The slider includes first and second flat sliding contact surfaces respectively making sliding contact with the first and second sliding contact surfaces of the rack housing. The first sliding contact surface of the rack housing extends in parallel to a longitudinal direction of the elongate hole and a depthwise direction of the elongate hole. The second sliding contact surface of the rack housing is formed perpendicular to the first sliding contact surface of the rack housing.

The constitution disclosed in Japanese Unexamined Patent Publication No.2000-62628 has a problem of high manufacture cost because the first and second sliding contact surfaces are perpendicular to each other.

### SUMMARY OF THE INVENTION

The invention seeks to provide a center-takeoff rack-and-pinion steering apparatus which is capable of suppressing the rattling of the rack shaft and which is less costly.

According to a preferred embodiment of the invention, a center-takeoff rack-and-pinion steering apparatus is provided, comprising: a pinion rotated together with a steering member; a rack shaft meshed with the pinion and extending in an axial direction; and a cylindrical housing for supporting the rack shaft movably in the axial direction. The above steering apparatus comprises a connecting unit arranged to connect respective ends of a pair of tie rods for steering a pair of vehicle wheels to an axially intermediate portion of the rack shaft. The housing is formed with an elongate hole extending in a longitudinal direction parallel to the axial direction of the rack shaft. The connecting unit includes a slider slidably movable on an inner periphery of the elongate hole. The inner periphery of the elongate hole and the slider respectively include sliding contact surfaces sliding on each other in conjunction with the sliding movement of the slider. The sliding contact surface on the inner periphery of the elongate hole and the sliding contact surface of the slider are inclined in both a widthwise direction of the elongate hole which is perpendicular to the longitudinal direction of the elongate hole and a depthwise direction of the elongate hole.

According to the embodiment, the rack shaft is less the prone to rattle because the sliding contact surface of the housing can restrict the movement of the slider in both the depthwise direction of the elongate hole and the widthwise direction thereof. Further, the sliding contact surface according to the embodiment is simplified in structure as compared with the conventional apparatus wherein the first sliding contact surface for restricting the movement of the slider in the widthwise direction of the elongate hole and the second sliding contact surface for restricting the movement of the slider in the depthwise direction of the elongate hole are separately provided. Therefore, the reduction of manufacture cost is achieved.

### BRIEF DESCRIPTION OF THE DRAWINGS

FIG.1 is a schematic diagram showing a general structure of a center-takeoff rack-and-pinion steering apparatus according to one embodiment of the invention;
FIG.2 is a partly sectional view of an essential part of a steering mechanism and is equivalent to a sectional view taken on the line II-II in FIG.3;
FIG.3 is a partly sectional view taken on the line III-III in FIG.2;
FIG.4 is an exploded perspective view of the essential part of the steering mechanism, also schematically showing peripheral portions; and
FIG.5 is a partly broken perspective view schematically showing a slider and an elongate hole.

### DETAILED DESCRIPTION OF THE PREFERRED EMBODIMENT

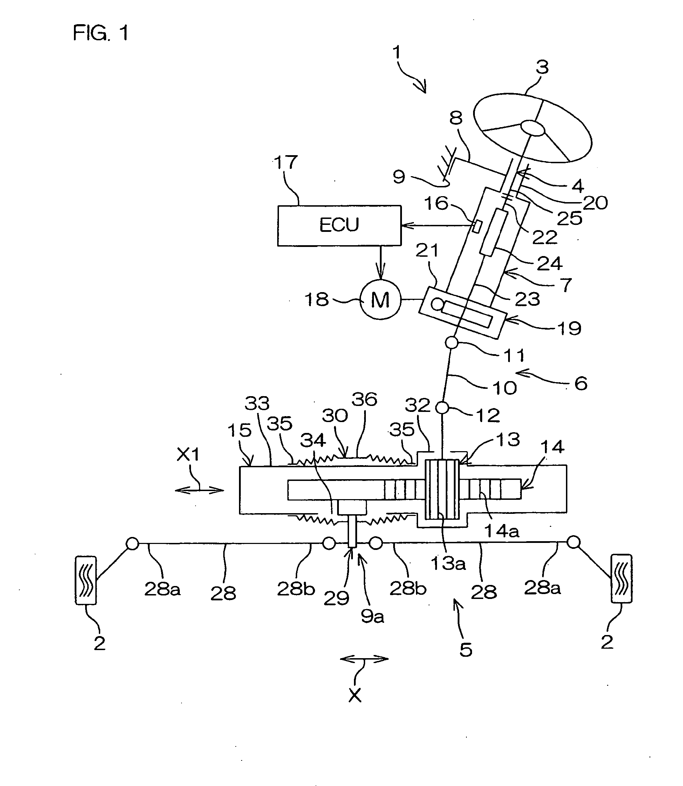

The embodiment of the present invention will hereinbelow be described in detail with reference to the accompanying drawings. While the embodiment is described where a center-takeoff rack-and-pinion steering apparatus is an electric power steering apparatus, the invention is not limited to this. For instance, the steering apparatus of the embodiment may also be a manual steering apparatus. FIG.1 is a schematic diagram showing a general structure of a center-takeoff rack-and-pinion steering apparatus according to one embodiment of the invention.

Referring to FIG.1, the center-takeoff rack-and-pinion steering apparatus 1 (hereinfter, also referred to simply as "steering apparatus 1") comprises: a steering shaft 4 for transmitting a steering torque applied to a steering wheel 3 as a steering member for vehicle wheels 2; and a steering mechanism 5 including, for example, a rack-and-pinion mechanism for steering the vehicle wheels 2 by the steering torque from the steering shaft 4. The steering apparatus 1 further comprises an intermediate shaft 6 as a shaft coupler interposed between the steering shaft 4 and the steering mechanism 5 for transmitting rotation therebetween.

The steering shaft 4 is inserted through a steering column 7 and rotatably supported by the steering column 7. The steering column 7 is supported by a vehicle body 9 via a bracket 8. The steering wheel 3 is unitarily rotatably coupled with one end of the steering shaft 4. The intermediate shaft 6 is coupled with the other end of the steering shaft 4.

The intermediate shaft 6 includes: a power transmission shaft 10; a universal joint 11 disposed at one end of the intermediate shaft 6; and a universal joint 12 disposed at the other end of the intermediate shaft 6.

The steering mechanism 5 includes: a pinion 13 as an input shaft; and a rack shaft 14 as a steering shaft extending in a transverse direction X of an automobile (orthogonal to the traveling direction of the automobile). The pinion 13 and the rack shaft 14 are supported by a housing 15. The pinion 13 has pinion teeth 13a meshed with rack teeth 14a of the rack shaft 14.

The pinion 13 is rotatably supported by a gear housing 32 constituting a part of the housing 15. The rack shaft 14 is linearly reciprocably supported by a cylindrical rack housing 33. The rack housing 33 is fixed to the vehicle body 9. The rack shaft 14 is coupled to the corresponding vehicle wheels 2 via tie rods 28 to be described hereinlater and knuckle arms (not shown).

When the steering wheel 3 is steered so as to rotate the steering shaft 4, the rotation is converted into a linear motion of the rack shaft 14 along the transverse direction X of the automobile by means of the pinion teeth 13a and the rack teeth 14a, whereby the vehicle wheels 2 can be steered.

The steering apparatus 1 is adapted to produce a steering assist force according to the steering torque. Specifically, the steering apparatus 1 includes: a torque sensor 16 for detecting the steering torque; an ECU 17 (Electronic Control Unit) as a controller; a steering assist electric motor 18; and a speed reducer 19 as a gear assembly. According to the embodiment, the electric motor 18 and the speed reducer 19 are operatively associated with the steering column 7.

The steering column 7 includes a column tube 20 and a housing 21. The housing 21 accommodates and supports the torque sensor 16. The housing 21 also supports the electric motor 18.

The steering shaft 4 includes: an input shaft 22, an output shaft 23 and a torsion bar 24 as an axially lower portion thereof; and a connecting shaft 25 as an axially upper portion thereof. The input shaft 22 and the output shaft 23 are coaxially coupled with each other via the torsion bar 24. The input shaft 22 is connected to the steering wheel 3 via the connecting shaft 25. The output shaft 23 is connected to the intermediate shaft 6. When the steering torque is inputted to the input shaft 22, the torsion bar 24 undergoes elastic torsional deformation, thereby causing the input shaft 22 and the output shaft 23 to rotate relative to each other.

The torque sensor 16 detects the torque based on the amount of relative rotational displacement between the input shaft 22 and the output shaft 23 via the torsion bar 24. The torque sensor 16 supplies the torque detection result to the ECU 17.

The ECU 17 controls the electric motor 18 based on the above torque detection result, vehicle speed detection result supplied from an unillustrated speed sensor, and the like.

When the steering wheel 3 is steered, the torque sensor 16 detects the steering toque, and the electric motor 18 generates the steering assist force based on the torque detection result, the vehicle speed detection result and the like. The steering assist force is transmitted to the steering mechanism 5 via the speed reducer 19. At the same time, the motion of the steering wheel 3 is also transmitted to the steering mechanism 5. As a result, the vehicle wheels 2 are steered while the steering action is assisted.

The steering apparatus 1 of the embodiment is arranged as a steering apparatus of a center-takeoff type. Specifically, a pair of tie rods 28 is led out from a central position 9a of the vehicle body 9 in the transverse direction X.

The steering mechanism 5 includes: the aforementioned pinion 13, rack shaft 14, housing 15 and pair of tie rods 28, and a connecting unit 29 for interconnecting the pair of tie rods and the rack shaft 14, and a dust cover 30.

Each of the tie rods 28 is a bar-like connecting member which interconnects the rack shaft 14 and the corresponding vehicle wheels 2 such that the vehicle wheels 2 may be steered in response to the linear displacement of the rack shaft 14. An outer end 28a as an outside end portion of each tie rod 28 is connected with the vehicle wheel 2. An inner end 28b as an inside end portion of each tie rod 28 is generally located at the central position of the vehicle body 9 in the transverse direction X. The inner end 28b of each tie rod 28 is connected to an intermediate portion of the rack shaft 14 in an axial direction X1 thereof.

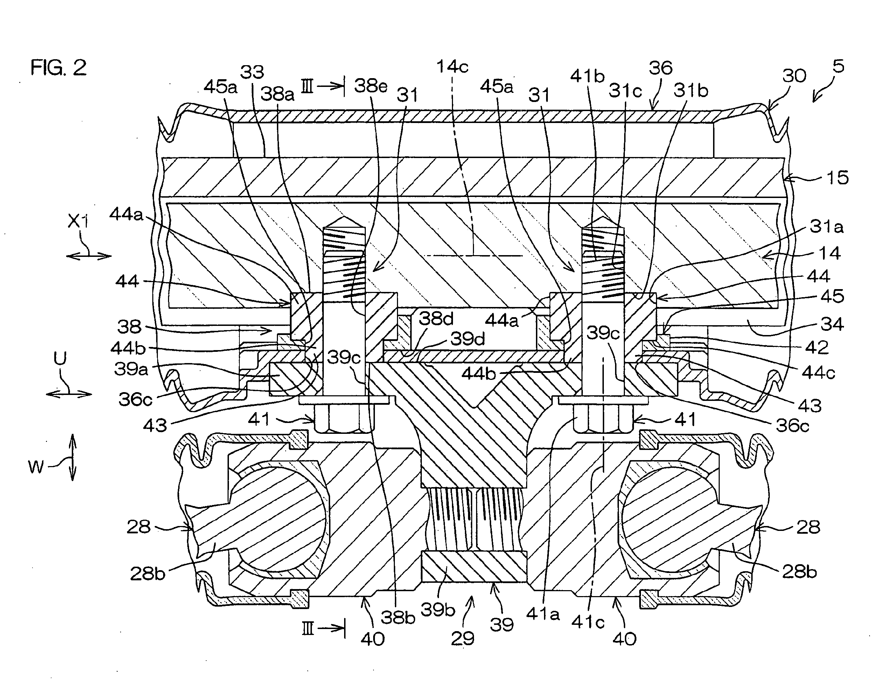

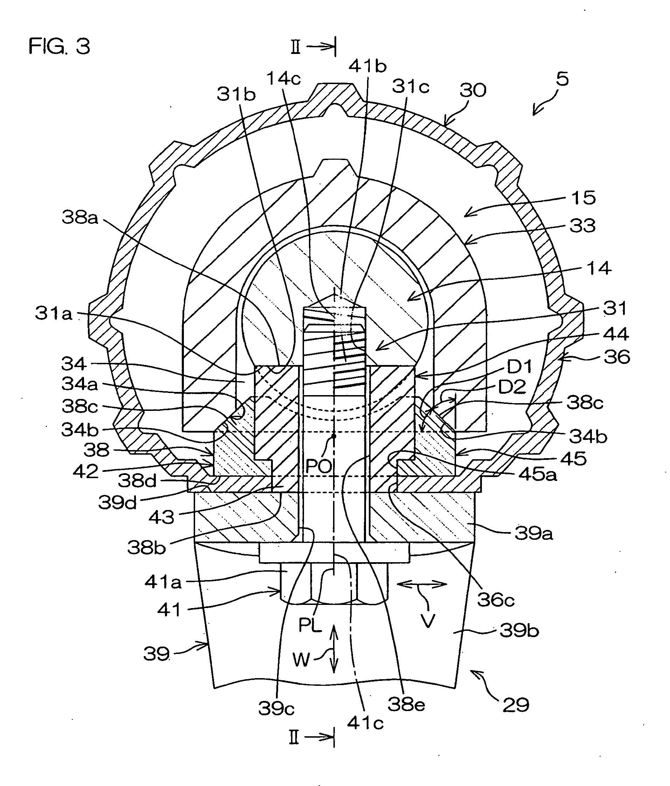

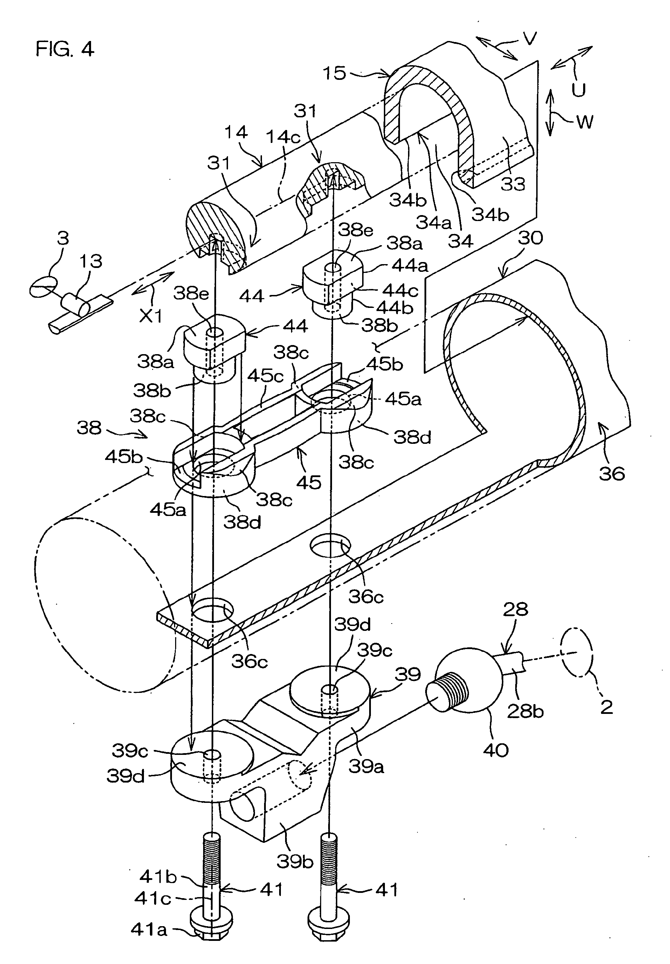

FIG.2 is a partly sectional view of an essential part of the steering mechanism 5 shown in FIG.1, showing a section taken on the line II-II in FIG. 3. FIG.3 is a partly sectional view taken on the line III-III in FIG.2. FIG.4 is an exploded perspective view of the essential part of the steering mechanism 5, also schematically showing peripheral portions of the essential part.

Referring to FIG.2 and FIG.4, the rack shaft 14 includes a pair of mounting portions 31 for mounting the connecting unit 29 to the intermediate portion thereof in the axial direction X1 thereof. Each of the mounting portions 31 includes: a recess 31a for positioningly receiving a spacer 44 of a slider 38 (described hereinlater) of the connecting unit 29; and a screw hole 31c formed in a bottom 31b of the recess 31a. A fixing screw 41 (described hereinlater) for fixing the connecting unit 29 is screwed in the screw hole 31c.

Referring to FIG.1 and FIG.3, the housing 15 slidably supports the rack shaft 14 in the axial direction X1 of the rack shaft 14. The housing 15 includes: the gear housing 32 accommodating therein the pinion 13; and the rack housing 33 continuous to the gear housing 32 and shaped like an elongate cylinder. A longitudinal direction of the rack housing 33 is parallel to the axial direction X1 of the rack shaft 14. The rack housing 33 is fixed to the gear housing 32 at one end thereof. The rack housing 33 supports the rack shaft 14 as accommodating therein the rack shaft 14. The rack housing 33 is formed with an elongate hole 34 at a longitudinally intermediate portion thereof.

A part of the connecting unit 29 is passed through the elongate hole 34. The elongate hole 34 is formed in a length corresponding to a moving range of the connecting unit 29 in order to permit the connecting unit 29 to move as the rack shaft 14 is displaced in the axial direction X1.

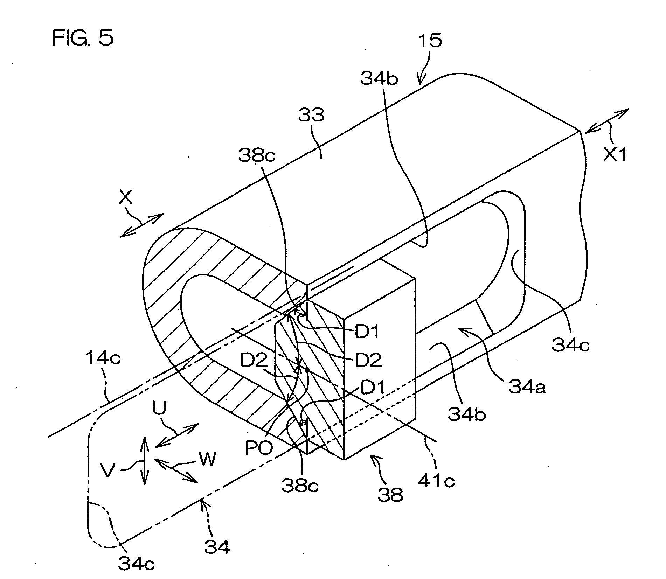

FIG.5 is a partly broken perspective view schematically showing the elongate hole 34 and the slider 38.

Referring to FIG.3 and FIG.5, the elongate hole 34 is extended in parallel to the longitudinal direction of the rack housing 33 and is extended through an inner periphery and an outer periphery of the rack housing 33 in a radial direction thereof. The radial direction corresponds to a depthwise direction W of the elongate hole 34 and leads to the center of the rack shaft 14 via a central position P0 of the elongate hole 34 in a widthwise direction V thereof.

The elongate hole 34 is extended longer in a longitudinal direction U thereof and shorter in a transverse direction V thereof. The longitudinal direction U is parallel to the longitudinal direction of the rack housing 33. The transverse direction V is equivalent to the widthwise direction of the elongate hole 34. The transverse direction V is perpendicular to the longitudinal direction U of the elongate hole 34 and is also perpendicular to the depthwise direction W of the elongate hole 34. Hereinafter, the transverse direction V is also referred to as the widthwise direction V.

An inner periphery 34a of the elongate hole 34 includes: a pair of sliding contact surfaces 34b making contact with sliding contact surfaces 38c of the slider 38 to be described hereinlater; and a pair of non-contact portions 34c making no contact with the slider 38. The pair of non-contact portions 34c is formed at the opposite ends of the elongate hole 34 in the longitudinal direction U.

In the inner periphery 34a of the elongate hole 34, the pair of sliding contact surfaces 34b is respectively formed at a pair of edge portions opposing each other in the transverse direction V of the elongate hole 34. The pair of sliding contact surfaces 34b each extends in parallel to the longitudinal direction U of the elongate hole 34. Each of the sliding contact surfaces 34b faces outwardly of the rack housing 33 in the depthwise direction W of the elongate hole 34 and is formed in a flat plane. The pair of sliding contact surfaces 34b is inclined to open toward the outside of the rack housing 33.

Referring to FIG.3, the pair of sliding contact surfaces 34b are configured such that, as seen in the axial direction X1 of the rack shaft 14, the distance between the corresponding above-described parts of the paired sliding contact surfaces 34b (equivalent to the dimension of the elongate hole 34 in the transverse direction V) is progressively increased as the positions of the corresponding parts of the paired sliding contact surfaces 34b in the depthwise direction W are farther away from the rack shaft 14.

Referring to FIG.3 and FIG.5, each of the sliding contact surfaces 34b is inclined at a predetermined angle D1 in the widthwise direction V of the elongate hole 34 and at a predetermined angle D2 in the depthwise direction W of the elongate hole 34, as seen in the axial direction X1 of the rack shaft 14. The first predetermined angles D1 of the paired sliding contact surfaces 34b are of the same value. The second predetermined angles D2 of the paired sliding contact surfaces 34b are of the same value.

Each sliding contact surface 34b is inclined at the second predetermined angle D2 to the following plane PL. The plane PL includes a central axis 14c of the rack shaft 14 and a central axis 41c of the fixing screw 41. As seen in the axial direction X1 of the rack shaft 14, the pair of sliding contact surfaces 34b are disposed in a line symmetrical relation with respect to the central axis 41c of the fixing screw 41.

Referring to FIG.1 and FIG.3, the dust cover 30 is shaped like a tube extended in one direction. The dust cover 30 is formed of a rubber member or synthetic resin member as an elastic member such as to be extensible in the extension direction thereof (longitudinal direction). The longitudinal direction of the dust cover 30 is parallel to the longitudinal direction of the rack housing 33. The dust cover 30 covers the elongate hole 34 of the rack housing 33.

The dust cover 30 has its longitudinally opposite ends 35 fixed to the rack housing 33. A longitudinally central portion 36 of the dust cover 30 is adapted to move together with the connecting unit 29 and includes holes 36c extending through the dust cover 30. The holes 36c are provided in order to permit the interconnection between the tie rods 28 and the rack shaft 14. The holes 36c are penetrated by the spacer 44 of: the slider 38 (described hereinlater) of the connecting portion 29 and by the fixing screw 41.

Referring to FIG.2 and FIG.4, the connecting portion 29 includes: the slider 38 sliding on the inner periphery 34a of the elongate hole 34 of the rack housing 33 as moving together with the rack shaft 14; a mounting bracket 39 for mounting the paired tie rods 28 to the slider 38; sphere bearings 40 as a pair of joints for pivotally connecting the paired tie rods 28 with the mounting bracket 39; and a plurality of, for example two, fixing screws 41 as fixing members for fixing the mounting bracket 39 and the slider 38 to the rack shaft 14.

The inner end 28b of the tie rod 28 is coupled to the rack shaft 14 via the sphere bearing 40, the mounting bracket 39, and the slider 38. The number of the fixing screws 41 to be used may be one or more than one. What is required is that at least one fixing screw is used. The embodiment is described by way of example where the two fixing screws 41 are used.

The sphere bearing 40 includes a ball and a concave-shaped receiving member for receiving therein the ball. The ball defines a partial spherical surface and is fixed to the inner end 28b of the corresponding tie rod 28. The receiving member defines a partial spherical surface. The center of the partial spherical surface of the ball (coincides with the center of the partial spherical surface of the receiving member) is the center of the sphere bearing 40. The corresponding tie rod 28 is adapted to be pivotable about this center. The receiving member has a mounting screw projected therefrom for mounting the receiving member to the mounting bracket 39, the mounting screw serving as a support shaft. The mounting screw and the receiving member are formed as separate members and fixed to each other. The mounting screw is formed with male threads.

The mounting bracket 39 is provided to mount the inner end 28b of the tie rod 28 to the rack shaft 14. The mounting bracket 39 includes: a base 39a opposing the slider 38; and a support arm 39b as a supporting portion projected from the base 39a. The base 39a and the support arm 39b define a T-shape and are formed in one piece from a single member.

The base 39a includes a pair of screw through-holes 39c extended through the base 39a. The screw through-hole 39c is penetrated by the fixing screw 41. The base 39a further includes an opposing portion 39d opposing the dust cover 30. At least a part of the opposing portion 39d is abutted against the dust cover 30.

The support arm 39b is extended from the base 39a at the central position thereof in the axial direction X1. Specifically, the support arm 39b is extended from the base 39a in a direction perpendicular to the axial direction X1 and away from the rack shaft 14 in the depthwise direction W of the elongate hole 34.

The support arm 39b is coupled to the pair of sphere bearings 40. The support arm 39b supports the inner ends 28b of the paired tie rods 28 via the paired sphere bearings 40. Specifically, the support arm 39b includes a screw hole extending therethrough in a direction parallel to the axial direction X1. The mounting screws of the paired sphere bearings 40 are screwed into the screw hole via the opposite sides of the screw hole.

The fixing screw 41 penetrates the mounting bracket 39 and the slider 38 so as to be secured to the rack shaft 14. Specifically, the fixing screw 41 is a bolt which includes a head 41a and a shank 41b formed with a male thread. According to the embodiment, the central axis 41c of the fixing screw 41 is parallel to the depthwise direction W of the elongate hole 34 and intersects perpendicularly the central axis 14c of the rack shaft 14. In some cases, however, the fixing screw 41 may be offset in the widthwise direction V of the elongate hole 34. The male threads on the shank 41b of the fixing screw 41 are screwed into the screw hole 31c in the mounting portion 31 of the rack shaft 14. The mounting bracket 39 and the slider 38 are clamped between the head 41a of the fixing screw 41 and the bottom 31b of the recess 31a of the mounting portion 31 of the rack shaft 14.

The slider 38 is fixed to the mounting portion 31 of the rack shaft 14 so as to be able to move together with the rack shaft 14. The slider 38 is interposed between the mounting bracket 39 and the rack shaft 14 for interconnecting these members. The slider 38 together movably retains the dust cover 30 at the central portion 36 thereof.

Referring to FIG.3 and FIG.4, the slider 38 includes: a first connecting portion 38a fixed to the rack shaft 14; a second connecting portion 38b fixed to the mounting bracket 39; the sliding contact surface 38c as a slide contact portion slidably fitted in the inner periphery 34a of the elongate hole 34 of the rack housing 33; a retaining portion 38d opposing the mounting bracket 39 so as to retain the dust cover 30 in a clamped state; and a screw through-hole 38e penetrated by the fixing screw 41.

While these portions 38a, 38b, 38c, 38d, 38e are disposed at plural places, respectively, what is required is that each of these portions may be disposed at least one place.

Referring to FIG.2 and FIG.3, the slider 38 includes a main body 42 and two projections 43. The two projections 43 are formed in the same configuration.

The main body 42 is disposed at place closer to the rack shaft 14 than the retaining portion 38d is. The main body 42 includes the aforesaid first connecting portion 38a, sliding contact surface 38c and retaining portion 38d. Each of the projections 43 is defined by a portion of the slider 38, which is on a distal-end side from the retaining portion 38d. The projection 43 projects from the main body 42 in a direction perpendicular to the axial direction X1 of the rack shaft 14. Each of the projections 43 includes the second connecting portion 38b. The screw through-hole 38e extends through the main body 42 and the corresponding projection 43.

Specifically, the slider 38 includes a slider body 45 including the aforesaid sliding contact surface 38c, and a pair of cylindrical spacers 44 corresponding to the tie rods 28. The spacer 44 is interposed between the slider body 45 and the rack shaft 14 for restricting a distance between the slider body 45 and the rack shaft 14. The pair of spacers 44 are interconnected via the slider body 45. The paired spacers 44 and the slider body 45 are formed as separate members, which are combined with each other to constitute the slider 38.

Referring to FIG.2 and FIG.4, the spacer 44 interconnects the rack shaft 14 disposed in the rack housing 33 and the base 39a of the mounting bracket 39 disposed outside the rack housing 33 in a manner that the rack shaft and the base can be moved together as spaced away from each other. The spacer 44 includes: a first portion 44a disposed closer to the rack shaft 14 and having the greater diameter; and a second portion 44b which is disposed closer to the mounting bracket 39 than the first portion 44a is and which has the smaller diameter. The first portion 44a and the second portion 44b are formed in one piece. The screw through-hole 38e extends through the first and second portions 44a, 44b.

The first portion 44a includes the first connecting portion 38a. The first portion 44a inhibits the rack shaft 14 and the slider body 45 from rotating relative to each other about the axis 41c of the fixing screw 41 while positioning the rack shaft 14 and the slider body 45 in a direction to come close to each other. The second portion 44b includes the second connecting portion 38b. An outer periphery of the second portion 44b is formed in a cylindrical surface and is continuous to an outer periphery of the first portion 44a via an end face 44c.

The slider body 45 is formed of a synthetic resin member having a small sliding resistance. The slider body 45 includes: a pair of annular portions 45b retaining the pair of spacers 44 respectively; and a connecting portion 45c interconnecting the pair of annular portions 45b to each other. Each of the annular portions 45b is received by the end face 44c of the spacer 44.

Each annular portion 45b includes a through-hole 45a. Each through-hole 45a is penetrated by the second portion 44b of the corresponding spacer 44. A distal end of the second portion 44b projects from the through-hole 45a, constituting the aforesaid projection 43. The slider body 45 includes the sliding contact surfaces 38c and the retaining portions 38d.

Referring to FIG.3 and FIG.4, the sliding contact surfaces 38c are disposed at a pair of side portions of each of the paired annular portions 45b of the slider body 45. Namely, the sliding contact surfaces are disposed at four places of the entire slider 38. The two sliding contact surfaces 38c formed at one of the annular portions 45b and the two sliding contact surfaces formed at the other annular portion 45b are configured in the same way and are spaced a predetermined distance from each other in the longitudinal direction U of the elongate hole 34. The following description is made with reference to one of the annular portions 45b.

Referring to FIG.3 and FIG.5, each sliding contact surface 38c is disposed to oppose the sliding contact surface 34b on the inner periphery 34a of the elongate hole 34. Similarly to the sliding contact surfaces 34b on the inner periphery 34a of the elongate hole 34, the individual flat planes are arranged in parallel to the longitudinal direction U of the elongate hole 34 and form the aforesaid first and second predetermined angles D1, D2 in the widthwise direction V and the depthwise direction W of the elongate hole 34.

Each sliding contact surface 38c of the slider 38 and each sliding contact surface 34b on the inner periphery 34a of the elongate hole 34 oppose each other and are in surface contact with each other as allowed to move relative to each other in the longitudinal direction U of the elongate hole 34. Specifically, each sliding contact surface 38c of the slider 38 and each sliding contact surface 34b on the inner periphery 34a of the elongate hole 34 are in contact with predetermined lengths in the longitudinal direction U, the widthwise direction V and the depthwise direction W.

These sliding contact surfaces 38c, 34b slide on each other in conjunction with the sliding movement of the slider 38. The rack housing 33 and the slider 38 are designed not to make contact at areas other than the corresponding sliding contact surfaces 34b, 38c.

Referring to FIG.1 and FIG.3, in a case where an external force from the vehicle wheels 2 is exerted in the depthwise direction W of the elongate hole 34 via the tie rods 28 and the mounting bracket 39, for example, the sliding contact surfaces 38c of the slider 38 and the sliding contact surfaces 34b of the elongate hole 34 are abutted against each other, whereby the above external force is received. Consequently, the rack shaft 14 is prevented from moving in the depthwise direction W of the elongate hole 34. Therefore, the rattling of the rack shaft 14 can be suppressed. In a case where the external force is exerted in parallel to the widthwise direction V of the elongate hole 34, as well, the rattling of the rack shaft 14 can be suppressed in the same way.

Referring to FIG.1 and FIG.4, the steering apparatus 1 of the embodiment is a steering apparatus of center-takeoff type wherein the rotation of the pinion 13 rotated following the steering wheel 3 as the steering member is converted into the linear displacement of the rack shaft 14 extending in a transverse direction X of the vehicle body 9 and wherein the pair of tie rods 28 responding to the linear displacement so as to steer the pair of vehicle wheels 2 are led out from the central position 9a of the vehicle body 9 in the transverse direction X thereof.

The steering apparatus 1 slidably movably supports the rack shaft 14 in the axial direction X1 and comprises: the cylindrical rack housing 33 including the elongate hole 34 extending in the longitudinal direction U; the mounting bracket 39 for mounting the respective inner ends 28b of the tie rods 28 to the rack shaft 14; and the slider 38 sliding on the inner periphery 34a of the elongate hole 34 and interposed between the mounting bracket 39 and the rack shaft 14.

The inner periphery 34a of the elongate hole 34 and the slider 38 respectively include the sliding contact surfaces 34b, 38c which slide on each other in conjunction with the sliding movement of the slider 38. These sliding contact surfaces 34b, 38c are inclined to both the widthwise direction V of the elongate hole 34 which is perpendicular to the longitudinal direction U of the elongate hole 34 and the depthwise direction W of the elongate hole 34.

According to the embodiment, the sliding contact surfaces 34b on the inner periphery 34a of the elongate hole 34 of the rack housing 33 are capable of restricting the movement of the slider 38 in the depthwise direction W of the elongate hole 34 and the widthwise direction V of the elongate hole 34. Hence, the rack shaft 14 is less prone to rattle. In addition, the sliding contact surfaces 34b, 38c are formed as the inclined surfaces, so that the sliding contact surfaces 34b, 38c are simplified in structure, leading to the reduction of manufacture cost. Further, the sliding contact surfaces 34b, 38c are formed as the flat planes, so that the manufacture cost is reduced even further.

Two pairs of sliding contact surfaces 38c of the slider 38 and sliding contact surfaces 34b of the elongate hole 34, which slide on each other, are provided in a mutually reversely inclined relation in the widthwise direction V of the elongate hole 34. This ensures that the external force is positively received with respect to the both ways of the widthwise direction V.

The following exemplary modifications may be made to the embodiment. The following description focuses on differences from the foregoing embodiment. The same reference characters refer to the corresponding components and the description thereof is omitted.

A constitution may also be contemplated wherein, for example, the sliding contact surfaces 38c, 34b are provided on only one side with respect to the central axis 41c of the fixing screw 41, as seen in the axial direction X1 of the rack shaft 14.

While the aforementioned steering apparatus 1 employs the electric motor as a driving source providing the steering assist force, an oil hydraulic power cylinder as a hydraulic actuator may be used. The driving source providing the steering assist force may also be provided in the rack housing 33 in addition to the steering column 7.

While the invention has been described in greater details with reference to the specific examples thereof, it is apparent that changes, modifications and equivalents thereof will occur to those skilled in the art who have understood the above contents. The scope of the invention, therefore, is defined by the appended claims.

## Claims

1. A center-takeoff rack-and-pinion steering apparatus (1) comprising:
a pinion (13) rotated together with a steering member (3);
a rack shaft (14) meshed with the pinion (13) and extending in an axial direction (X1) thereof;
a cylindrical rack housing (33) for supporting the rack shaft (14) so as to permit a movement thereof in the axial direction (X1); and
a connecting unit (29) for connecting respective ends (28b) of a pair of tie rods (28) for steering a pair of vehicle wheels (2) with an intermediate portion of the rack shaft (14) in the axial direction (X1),
wherein the rack housing (33) is formed with an elongate hole (34) extending in a longitudinal direction (U) parallel to the axial direction (X1) of the rack shaft (14),
wherein the connecting unit (29) includes a slider (38) slidably movable on an inner periphery (34a) of the elongate hole (34),
wherein the inner periphery (34a) of the elongate hole (34) and the slider (38) respectively include sliding contact surfaces (34b, 38c) sliding on each other in conjunction with the sliding movement of the slider (38), and
**characterised by** the sliding contact surface (34b) on the inner periphery (34a) of the elongate hole (34) and the sliding contact surface (38c) of the slider (38) being inclined in both a widthwise direction (V) of the elongate hole (34) which is perpendicular to the longitudinal direction (U) of the elongate hole (34) and a depthwise direction (W) of the elongate hole (34).

2. A center-takeoff rack-and-pinion steering apparatus (1) according to Claim 1,
wherein the connecting unit (29) includes: a mounting bracket (39) for mounting the slider (38) to the pair of tie rods (28); a joint (40) for pivotably connecting each of the pair of tie rods (28) to the mounting bracket (39); and a fixing member (41) for fixing the mounting bracket (39) and the slider (38) to the rack shaft (14).

3. A center-takeoff rack-and-pinion steering apparatus (1) according to Claim 2,
wherein the mounting bracket (39) includes: a base (39a) opposed to the slider (38); and a support arm (39b) projecting from a central part of the base (39a) and supporting the joint (40).

4. A center-takeoff rack-and-pinion steering apparatus (1) according to any one of Claims 1 to 3,
wherein the slider (38) includes: a slider body (45); and a spacer (44) for restricting a distance between the slider body (45) and the rack shaft (14).

5. A center-takeoff rack-and-pinion steering apparatus (1) according to any of Claims 2 to 4,
wherein the mounting bracket (39) includes a base (39a) opposed to the slider (38),
wherein the spacer (44) includes a projection (43) abuts against the mounting bracket (39) through a through-hole (45a) formed in the slider body (45), and
wherein a part of a dust cover (30) surrounding the rack housing (33) is clamped between the slider body (45) and the base (39a).

6. A center-takeoff rack-and-pinion steering apparatus (1) according to Claim 5,
wherein the connecting unit (29) includes a screw (41) as a fixing member for fixing the mounting bracket (39) and the slider (38) to the rack shaft (14), and
wherein the screw (41) is screwed into a screw hole (31c) of the rack shaft (14) through a screw through-hole (39c) formed in the base (39a) and a screw through-hole (38e) formed in the spacer (44).

7. A center-takeoff rack-and-pinion steering apparatus (1) according to any one of Claims 1 to 6;
wherein the inner periphery (34a) of the elongate hole (34) is formed with a pair of sliding contact surfaces (34b) making sliding contact with the corresponding sliding contact surfaces (38c) of the slider (38), and
wherein the pair of sliding contact surfaces (34b) are inclined at the same angle (D1) and oriented in mutually opposite directions with respect to the widthwise direction (V) of the elongate hole (34).

## Patentansprüche

1. Außermittige Zahnstangenlenkvorrichtung (1) mit:
einem Ritzel (13), das sich zusammen mit einem Steuerelement (3) dreht;
einer Zahnstange (14), die mit dem Ritzel (13) kämmt und sich in einer axialen Richtung (X1) davon erstreckt;
einem zylindrischen Zahnstangengehäuse (33) zur Aufnahme der Zahnstange (14), um so eine Bewegung derselben in der axialen Richtung (X1) zu erlauben und
einer Verbindungseinheit (29) zur Verbindung der betreffenden Enden (28b) eines Paars von Verbindungsstangen (28) zum Steuern eines Paars von Fahrzeugrädern (2) mit einem Mittelbereich der Zahnstange (14) in der axialen Richtung (X1),
wobei das Zahnstangengehäuse (33) mit einem Längsloch (34) gebildet ist, das sich in einer Längsrichtung (U) parallel zu der axialen Richtung (X1) der Zahnstange (14) erstreckt,
wobei die Verbindungseinheit (29) einen Schieber (38) umfasst, der an einem Innenumfang (34a) des Längsloches (34) gleitend beweglich ist,
wobei der Innenumfang (34a) des Längsloches (34) und der Schieber (38) jeweils Gleitkontaktflächen (34b, 38c) aufweisen, die aufeinander in Übereinstimmung mit der Verschiebebewegung des Schiebers (38) gleiten, **gekennzeichnet durch** die Gleitkontaktfläche (34b) auf der Innenoberfläche (34a) des Längsloches (34) und die Gleitkontaktfläche (38c) des Schiebers (38), die sowohl in einer Breitenrichtung (V) des Längsloches (34), die senkrecht zu der Längsrichtung (U) des Längsloches (34) ist, sowie in einer Tiefenrichtung (W) des Längsloches (34) geneigt ist.

2. Außermittige Zahnstangenlenkvorrichtung (1) nach Anspruch 1,
bei der die Verbindungseinheit (29) Folgendes aufweist: einen Befestigungsträger (39), um den Schieber (38) an dem Paar von Verbindungsstangen (28) zu befestigen; eine Verbindung (40) zur verschwenkbaren Verbindung von jedem der Paare von Verbindungsstangen (28) mit dem Befestigungsträger (39), sowie ein Befestigungselement (41) zum Befestigen des Befestigungsträgers (39) und des Schiebers (38) an der Zahnstangenwelle (14).

3. Außermittige Zahnstangenlenkvorrichtung (1) nach Anspruch 2,
wobei der Befestigungsträger (39) Folgendes aufweist: eine Basis (39a), die dem Schieber (38) gegenüberliegt; und einen Stützarm (39b), der von einem mittigen Teil der Basis (39a) hervorsteht und die Verbindung (40) unterstützt.

4. Außermittige Zahnstangenlenkvorrichtung (1) nach irgendeinem der Anspruche 1 bis 3,
bei der der Schieber (38) Folgendes aufweist: einen Schieberkörper (45) und einen Abstandshalter (44) zur Begrenzung eines Abstandes zwischen dem Schieberkörper (45) und der Zahnstangenwelle (14).

5. Außermittige Zahnstangenlenkvorrichtung (1) nach irgendeinem der Ansprüche 2 bis 4,
bei der der Aufnahmeträger (39) eine Basis (39a) aufweist, die dem Schieber (38) gegenüberliegt,
wobei der Abstandshalter (44) einen Vorsprung (43) aufweist, der an dem Befestigungsträger (39) über ein Durchgangsloch (45a) anliegt, das in dem Schieberkörper (45) gebildet ist, und wobei ein Teil einer Staubabdeckung (30) das Zahnstangengehäuse (33) umgibt und zwischen dem Schieberkörper (45) und der Basis (39a) eingeklemmt ist.

6. Außermittige Zahnstangenlenkvorrichtung (1) nach Anspruch 5,
bei der die Verbindungseinheit (29) eine Schraube (41) als eine Befestigungsschraube zum Fixieren des Befestigungsträgers (39) und des Schiebers (38) an der Zahnstangenwelle (14) einschließt, und wobei die Schraube (41) in ein Schraubloch (31c) der Zahnstangenwelle (14) über ein Durchgangsloch (39c), das in der Basis (39a) gebildet ist, und ein durchgängiges Gewindeloch (38e), das in dem Abstandshalter (44) gebildet ist, eingeschraubt wird.

7. Außermittige Zahnstangenlenkvorrichtung (1) nach irgendeinem der Ansprüche 1 bis 6,
bei der der Innenumfang (34a) des Längsloches (34) mit einem Paar von Gleitkontaktflächen (34b) gebildet ist, die einen Gleitkontakt mit den entsprechenden Gleitkontaktflächen (38c) des Schiebers (38) machen und
wobei das Paar von Gleitkonlaktflächen (34b) in demselben Winkel (D1) geneigt ist und in einander gegenüberliegenden Richtungen in Bezug auf die Ausdehnung des Längsloches (34) in der Breitenrichtung (V).

## Revendications

1. Direction à crémaillère à entraînement central (1) comportant :
un pignon (13) entraîné en rotation avec un élément de direction (3) ;
un arbre à crémaillère (14) en prise avec le pignon (13) et s'étendant dans une direction axiale (X1) de celui-ci ;
un boîtier de crémaillère cylindrique (33) destiné à supporter l'arbre à crémaillère (14) de façon à permettre un mouvement de celui-ci dans la direction axiale (X1) ; et
une unité de raccordement (29) destinée à raccorder des extrémités respectives (28b) d'une paire de biellettes (28) destinées à orienter une paire de roues de véhicule (2) avec une partie intermédiaire de l'arbre à crémaillère (14) dans la direction axiale (X1),
le boîtier de crémaillère (33) étant formé avec un trou allongé (34) s'étendant dans une direction longitudinale (U) parallèle à la direction axiale (X1) de l'arbre à crémaillère (14),
l'unité de raccordement (29) comprenant un élément coulissant (38) mobile de façon coulissante sur une périphérie intérieure (34a) du trou allongé (34),
la périphérie intérieure (34a) du trou allongé (34) et l'élément coulissant (38) comprenant de manière respective des surfaces de contact de glissement (34b, 38c) glissant l'une sur l'autre en liaison avec le mouvement coulissant de l'élément coulissant (38), et
**caractérisée par** la surface de contact de glissement (34b) sur la périphérie intérieure (34a) du trou allongé (34) et la surface de contact de glissement (38c) de l'élément coulissant (38) qui sont inclinées dans une direction transversale (V) du trou allongé (34) qui est perpendiculaire à la direction longitudinale (U) du trou allongé (34) et à une direction de profondeur (w) du trou allongé (34).

2. Direction à crémaillère à entraînement central (1) selon la revendication 1,
dans laquelle l'unité de raccordement (29) comprend : un support (39) pour le montage de l'élément coulissant (38) sur la paire de biellettes (28) ; un joint (40) destiné à relier de façon pivotante chaque biellette de la paire de biellettes (28) au support (39) ; et un élément de fixation (41) destiné à fixer le support (39) et l'élément coulissant (38) sur l'arbre à crémaillère (14).

3. Direction à crémaillère à entraînement central (1) selon la revendication 2,
dans laquelle le support (39) comprend : une base (39a) opposée à l'élément coulissant (38) ; et un bras de support (39b) qui dépasse d'une partie centrale de la base (39a) et supportant le joint (40).

4. Direction à crémaillère à entraînement central (1) selon l'une quelconque des revendications 1 à 3,
dans laquelle l'élément coulissant (38) comprend : un corps d'élément coulissant (45) ; et une entretoise (44) destinée à limiter une distance entre le corps d'élément coulissant (45) et l'arbre à crémaillère (14).

5. Direction à crémaillère à entraînement central (1) selon l'une quelconque des revendications 1 à 4,
dans laquelle le support (39) comprend une base (39a) opposée à l'élément coulissant (38),
l'entretoise (44) comprend une saillie (43) qui bute contre le support (39) à travers un trou débouchant (45a) formé dans le corps d'élément coulissant (45), et
une partie d'un cache anti-poussière (30) entourant le boîtier de crémaillère (33) est serrée entre le corps d'élément coulissant (45) et la base (39a).

6. Direction à crémaillère à entraînement central (1) selon la revendication 5,
dans laquelle l'unité de raccordement (29) comprend une vis (41) en tant qu'élément de fixation destiné à fixer le support (39) et l'élément coulissant (38) sur l'arbre à crémaillère (14), et
la vis (41) est vissée dans un trou de vis (31c) de l'arbre à crémaillère (14) à travers un trou de vis débouchant (39c) formé dans la base (39a) un trou de vis débouchant (38e) formé dans l'entretoise (44).

7. Direction à crémaillère à entraînement central (1) selon l'une quelconque des revendications 1 à 6 ;
dans laquelle la périphérie intérieure (34a) du trou allongé (34) est formée avec une paire de surfaces de contact de glissement (34b) réalisant un contact de glissement avec les surfaces de contact de glissement correspondantes (38c) de l'élément coulissant (38), et
les paires de surfaces de contact de glissement (34b) sont inclinées avec le même angle (D1) et orientées dans des directions mutuellement opposées par rapport à la direction transversale (V) du trou allongé (34).
